# EUROPÄISCHE PATENTANMELDUNG

(11) **EP 4 835 490 A1**
(43) Veröffentlichungstag der Anmeldung: **04.11.2026**
(21) Anmeldenummer: 26174998.0
(22) Anmeldetag: 28.04.2026
(51) Int. Cl.: G01P 5/26, G01P 13/02, G01S 17/58, G01S 17/95, G01P 21/02

(54) **SYSTEM UND VERFAHREN ZUR OPTISCHEN DETEKTION VON FLUGDATEN EINES UMSTRÖMTEN FLUGKÖRPERS**

(30) Priorität: 28.04.2025 DE 102025116281
(71) Anmelder: Deutsches Zentrum für Luft- und Raumfahrt e.V., 53227 Bonn (DE)
(72) Erfinder:
(74) Vertreter: dompatent

(57) **Zusammenfassung**

System zur optischen Detektion von Flugdaten eines umströmten Flugkörpers, aufweisend mehrere optische Sensoreinrichtungen, die jeweils hinter einer optischen Apertur angeordnet und zur Ferndetektion von Luftströmungen in Messpunkten beabstandet zur umströmten Oberfläche des Flugkörpers ausgebildet sind, insbesondere zur Bestimmung der Windgeschwindigkeit in einer Sichtlinienrichtung der optischen Sensoreinrichtung, wobei die mehreren optischen Aperturen an unterschiedlichen Positionen auf der Oberfläche des Flugkörpers verteilt angeordnet sind, sowie eine Verarbeitungseinrichtung, die aus den durch die optischen Sensoreinrichtungen erfassten Daten lokale Windgeschwindigkeiten in den Messpunkten mittels optischer Strömungsanalyse bestimmt, insbesondere durch Auswertung von Aerosolbewegungen und/oder Partikelbewegungen und/oder Strömungsmerkmalen.

## Beschreibung

Die vorliegende Erfindung betrifft sowohl ein System als auch ein Verfahren zur optischen Detektion von Flugdaten eines umströmten Flugkörpers.

Aus dem Stand der Technik sind bereits unterschiedliche Systeme bzw. Sensorvorrichtungen zur Bestimmung von Flugdaten an umströmten Flugkörpern in dem Bereich der Luftfahrt bekannt geworden. Diese Systeme umfassen beispielsweise die klassischen Pitot-Statik-Systeme, Flush-Air-Data-Sensoren und optische Air-Data-Sensoren. Die klassischen Pitot-Statik-Systeme bestehen aus den sogenannten Pitot-Rohren und statischen Ports, welche den Gesamtdruck und den statischen Druck im Bereich der Oberfläche des umströmten Flugkörpers messen, um daraus die Fluggeschwindigkeit als auch die Flughöhe des Flugkörpers zu bestimmen. Die vorbezeichneten Systeme sind im Stand der Technik weit verbreitet und weisen heutzutage eine hohe Zuverlässigkeit auf, allerdings jedoch auch eine Anfälligkeit gegenüber Vereisung und/oder Verstopfung des Pitot-Rohres durch Einwirkung von Fremdkörpern. Weiterhin besteht bei diesen Systemen das Problem, dass sich etwaig vorliegende Fehlerzustände nicht intrinsisch diagnostizieren lassen.

Die sogenannten Flush-Air-Data-Systeme (FADS) hingegen nutzen versenkte Sensoren, welche den Oberflächendruck entlang der umströmten Oberfläche des Flugkörpers messen. Die vorbezeichneten Systeme reduzieren dabei gegenüber den klassischen Pitot-Statik-Systemen den aerodynamischen Widerstand und weisen weiterhin eine reduzierte Anfälligkeit gegenüber etwaigen Verunreinigungen auf. Zudem weisen diese Systeme gegenüber den Pitot-Statik-Systemen den im Bereich der militärischen Luftfahrt bedeutenden Vorteil eines geringeren Radarquerschnitts auf, wodurch die Radarsignatur des Flugkörpers reduziert werden kann. Die Systeme erfordern jedoch komplexe Algorithmen zur Berechnung der zu ermittelnden Luftdaten.

Aus dem Stand der Technik sind weiterhin sogenannte optische Air-Data-Sensoren wie beispielsweise Laser-Doppler-Anemometer (LDA) und Doppler-Lidar bekannt geworden, welche die Möglichkeit einer kontaktlosen Messung von Luftgeschwindigkeit und Luftrichtung ermöglichen. Bei den vorbezeichneten optischen Sensoreinrichtungen kommen insbesondere Laserstrahlen zum Einsatz, um die Bewegung von Aerosolpartikeln in der Luft zu detektieren. Die Systeme und Verfahren ermöglichen genaue Messungen auch unter schwierigen Umweltbedingungen und weisen dabei eine geringere Empfindlichkeit gegenüber Vereisung auf und benötigen keine Öffnungen im Flugzeugrumpf, was den Vorteil einer erhöhten strukturellen Integrität im Bereich der Außenhaut des Flugkörpers gegenüber den Flush-Air-Data-Systemen aufweist. Zusätzlich lassen sich vorliegende Fehlerzustände mittels der optischen Air-Data-Sensoren, wie beispielsweise das Vorliegen einer Vereisung der Sensorik, intrinsisch entlang der Messkette detektieren. Die Radarsignatur ist ebenfalls gegenüber den Pitot-Statik-Systemen reduziert. Die aus dem Stand der Technik bereits bekannten klassischen Air-Data-Systeme weisen den Nachteil auf, dass sie eine erhöhte Anfälligkeit gegenüber Verschmutzung und Vereisung sowie die Notwendigkeit von von der Oberfläche des umströmten Luftfahrzeugs hervorstehenden Messsonden, sogenannten Pitot-Probes erfordern. Ein Nachteil mit den bekannten Flush-Air-Data-Systemen gemein ist die Messung direkt am Rumpf in der vollen Störung der Luftströmung durch den Flugzeugrumpf. Dieses Problem wird durch optische Air-Data-Sensoren lediglich teilweise mitigiert. Üblicherweise zielen die derzeitigen Ansätze für optische Air-Data-Sensoren darauf ab, mit einer einzigen Apertur in der Oberfläche des umströmten Flugkörpers eine Messung von verschiedenen Strömungsrichtungen durchzuführen und dabei einen lokalen Anströmvektor zu bestimmen. Die vorbezeichneten Verfahren führen jedoch zu sehr komplexen optischen Messköpfen und eine vollständige Kalibrierungsfreiheit kann gemäß Stand der Technik nicht realisiert werden.

Ausgehend von dem Stand der Technik stellt sich die vorliegende Erfindung die Aufgabe, ein verbessertes System zur optischen Detektion von Flugdaten sowie ein entsprechendes verbessertes Verfahren zur optischen Detektion von Flugdaten bereitzustellen, bei welchem die vorbezeichneten Nachteile behoben werden können und bei denen keine von dem Flugzeugrumpf vorstehenden Strukturen wie Probes erforderlich sind und wobei eine Messung der Flugdaten in der durch den umströmten Flugkörper ungestörten Luftströmung auch unter variierenden Flugzuständen des Flugkörpers ermöglicht wird.

Erfindungsgemäß gelöst wird die vorliegende Aufgabe gemäß einem ersten Aspekt der vorliegenden Erfindung durch ein System zur optischen Detektion von Flugdaten eines umströmten Flugkörpers. Das System weist dabei mehrere optische Sensoreinrichtungen auf, welche jeweils hinter einer optischen Apertur angeordnet und zur Ferndetektion von Luftströmungen in Messpunkten beabstandet zur umströmten Oberfläche des Flugkörpers ausgebildet sind, insbesondere zur Bestimmung der Windgeschwindigkeit in einer Sichtlinienrichtungen der jeweiligen optischen Sensoreinrichtung. Die mehreren optischen Aperturen sind dabei erfindungsgemäß an unterschiedlichen Positionen auf der Oberfläche des Flugkörpers verteilt angeordnet. Das erfindungsgemäße System weist weiterhin eine Verarbeitungseinrichtung auf, welche aus den durch die optischen Sensoreinrichtungen erfassten Daten lokale Windgeschwindigkeiten in den Messpunkten mittels optischer Strömungsanalyse bestimmt, insbesondere durch Auswertung von Aerosolbewegungen und/oder Partikelbewegungen und/oder weiteren Strömungsmerkmalen der den Flugkörper umströmenden Luft.

Erfindungsgemäß handelt es sich bei den beschriebenen Messpunkten um virtuelle Messpunkte, die zunächst aufgrund der Anordnung der optischen Aperturen auf der umströmten Oberfläche des Flugkörpers sowie weiterhin aufgrund der Ausrichtung der Sichtlinienrichtung und des Fokuspunkts der optischen Sensoreinrichtung, welche hinter den jeweiligen optischen Aperturen angeordnet sind, definiert bzw. vorgegeben ist.

Erfindungsgemäß ist es vorgesehen, dass hinter jeder optischen Apertur jeweils eine optische Sensoreinrichtung angeordnet ist, wobei die jeweilige Sensoreinrichtung dazu ausgebildet ist, in dem Fokuspunkt der jeweiligen Sensoreinrichtung die Luftströmung zu detektieren, insbesondere die Windgeschwindigkeit der Luftströmung in dem jeweiligen Fokuspunkt zu bestimmen. Insofern ist es erfindungsgemäß vorgesehen, dass jede Sensoreinrichtung jeweils einen virtuellen Messpunkt aufweist, der durch den Fokuspunkt der jeweiligen Messeinrichtung definiert ist.

Es kann vorgesehen werden, dass jede Sensoreinrichtung einen gemeinsamen optischen Ein- und Ausgang aufweist, welcher zum Aussenden von Strahlen in Sichtlinienrichtung zum Fokuspunkt der jeweiligen Messrichtung, sowie zum Empfang der von dem Fokuspunkt ausgehenden gestreuten Strahlen ausgebildet ist.

Erfindungsgemäß kann es vorgesehen werden, dass die jeweilige Sensoreinrichtung mindestens einen optischen Sensor zum Analysieren der vom Messpunkt gestreuten optischen Strahlen und mindestens eine Laserquelle aufweist, welche zum Aussenden von Strahlung in Sichtlinienrichtung zum Messpunkt ausgebildet ist.

Die Sensoreinrichtung kann dabei bevorzugt ein richtungsselektives optisches Element umfassen, welches im Bereich des gemeinsamen optischen Ein- und Ausgangs im Strahlengang der Sensoreinrichtung angeordnet und dazu ausgebildet ist, die von der mindestens einen Laserquelle ausgesendete Laserstrahlung in Richtung der optischen Apertur auszugeben und die über die optische Apertur empfangene gestreute Strahlung an den optischen Sensor zu leiten.

Dabei kann das richtungsselektive optische Element insbesondere einen Zirkulator oder einen Polarisationsstrahlteiler aufweisen.

Erfindungsgemäß ist es vorgesehen, dass die von der jeweiligen Sensoreinrichtung in Sichtlinienrichtung ausgesendeten Strahlen zum Fokuspunkt mit den an dem Fokuspunkt gestreuten Strahlen überlagert sind. Dies weist den Vorteil auf, dass erfindungsgemäß für jede Sensoreinrichtung lediglich eine einzelne optische Apertur benötigt wird.

Erfindungsgemäß kann es dabei vorteilhaft vorgesehen werden, dass die optische Sensoreinrichtung ferner eine optische Fasereinrichtung aufweist, welche zwischen der optischen Apertur und einem optischen Aus- und Eingang der Sensoreinrichtung angeordnet ist und zur optischen Leitung der von der Sensoreinrichtung ausgesendeten Strahlen zu der optischen Apertur und zum Empfang der von dem virtuellen Messpunkt gestreuten und im Bereich der optischen Apertur auftreffenden Strahlen und rückleitend an den optischen Aus- und Eingang der Sensoreinrichtung ausgebildet ist. Die vorbezeichnete Ausführungsform weist dabei den Vorteil auf, dass die Sensoreinrichtung und insbesondere der optische Aus- und Eingang der Sensoreinrichtung nicht unmittelbar im Bereich hinter der optischen Apertur angeordnet werden müssen, sondern vielmehr beliebig im Bauraum des Flugkörpers angeordnet werden können, wobei der optische Aus- und Eingang der jeweiligen Sensoreinrichtung optisch mit jeweils einer spezifischen Apertur verbunden ist.

Bevorzugt erfolgt die Leitung der Laserstrahlung ausgehend von der Laserquelle über eine optische Fasereinrichtung zur optischen Apertur, die an dem Messpunkt gestreute Strahlung wird im Bereich der optischen Apertur wieder in die Fasereinrichtung eingekoppelt und an den optischen Sensor geleitet zur Auswertung. Dabei kann die Fasereinrichtung ein richtungsselektives optisches Element, wie insbesondere einen Zirkulator oder einen Polarisationsstrahlteiler, aufweisen, welcher dazu ausgebildet ist, die ausgesendete Laserstrahlung in die Fasereinrichtung einzukoppeln zur Weiterleitung an die optische Apertur und die über die optische Apertur empfangene gestreute und über die Fasereinrichtung geleitete Strahlung an den optischen Sensor zu leiten.

Zur Erzeugung des Fokuspunktes kann die optische Apertur eine abbildende Optik und/oder eine Teleskopeinrichtung aufweisen.

Die optischen Sensoreinrichtungen sind dabei jeweils zur Detektion der Luftströmungen beabstandet zu der umströmten Oberfläche des Flugkörpers in mindestens einem virtuellen Messpunkt ausgebildet. Die optischen Sensoreinrichtungen ermöglichen es erfindungsgemäß, die virtuellen Messpunkte fernab der umströmten Oberfläche des Flugkörpers frei im Strömungsvolumen zu wählen. Das erfindungsgemäße System ermöglicht es besonders vorteilhaft, die Messpunkte in Bereichen der Luftströmung außerhalb der laminaren oder turbulenten Grenzschicht der umströmten Oberfläche des Flugkörpers zu wählen und dort die ungestörten lokalen Windgeschwindigkeiten zu messen. Die Dicke der laminaren oder turbulenten Grenzschicht nimmt entlang der umströmten Oberfläche kontinuierlich zu, dies resultiert darin, dass die klassischen Drucksensoren zur Messung immer im Bereich einer Vorderkante bzw. Beginns einer umströmten Oberfläche eines Flugkörpers gewählt werden, wie insbesondere im Bereich einer Flugzeugnase. Die Messungen von Flugdaten, wie insbesondere die Messung von lokalen Fluggeschwindigkeiten im Bereich eines Hecks eines umströmten Flugkörpers, werden erst durch die optischen Sensoreinrichtungen erfindungsgemäß ermöglicht.

Das erfindungsgemäße System, wobei die mehreren optischen Aperturen und die Messpunkte der optischen Sensoreinrichtungen entlang der umströmten Oberfläche verteilt angeordnet werden, weist den besonderen Vorteil auf, dass eine besonders hohe Redundanz gegenüber äußeren Einflüssen, wie Vogelschlag, Vereisung, etc. erreicht werden kann. Zusätzlich besteht jedoch auch eine erhöhte Redundanz und Datenqualität des Systems durch die Verteilung der Sensoraperturen, da sich auf unter verändernden Flugbedingungen des Flugkörpers immer zumindest eine optische Sensoreinrichtungen außerhalb ungestörter Luftströmung befinden.

Die Bestimmung der Windgeschwindigkeit in Sichtlinienrichtung der optischen Sensoreinrichtung erfolgt dabei beispielsweise durch eine optische Rückstreuung an Aerosolen in der den Flugkörper umströmenden Luft.

Die optischen Sensoreinrichtungen können dabei insbesondere zur Detektion von Bilddaten ausgebildet werden.

Bei dem umströmten Flugkörper kann es sich erfindungsgemäß um einen im Flug befindlichen beliebigen Flugkörper, wie insbesondere eine Rakete, einen luftatmenden Flugkörper, ein Flugzeug, einen Drehflügler, wie insbesondere ein Hubschrauber, etc. handeln. Erfindungsgemäß kann es sich jedoch alternativ bei dem umströmten Luftkörper auch um einen Flugkörper handeln, welcher statisch gelagert ist und beispielsweise in einem Windkanal durch eine Luftströmung oder eine Fluidströmung umströmt wird.

Das erfindungsgemäße System kombiniert die Merkmale der Flush-Air-Data-Systeme und von optischen Air-Data-Systemen zu einem rumpfbündigen optischen Sensorsystem zur Bestimmung von Flugdaten. Das erfindungsgemäße System weist dabei den Vorteil auf, dass optische Aperturen und damit auch die hinter den optischen Aperturen angeordneten optischen Sensoreinrichtungen an unterschiedlichen bzw. verschiedensten Stellen der umströmten Oberfläche des Flugkörpers, insbesondere an unterschiedlichen Stellen der umströmten Außenkontur eines Flugzeugs, angebracht werden können.

Dabei sind die erfindungsgemäß vorgesehenen optischen Sensoreinrichtungen zur Messung der Windgeschwindigkeit in den Messpunkten ausgebildet. Im Gegensatz zu den aus dem Stand der Technik bekannten System und Verfahren liegt der besondere Vorteil der vorliegenden Erfindung darin, dass es die Ferndetektionseigenschaften der optischen Sensoreinrichtungen ermöglichen, die virtuellen Messpunkte in gewünschten optimalen Punkten in der Umströmung des Flugkörpers zu setzen, wobei man bei der Definition bzw. Anordnung der Messpunkte nicht auf die Oberfläche bzw. Kontur des Flugkörpers beschränkt ist.

Die Verwendung von mehreren Aperturen und entsprechend mehreren optischen Sensoreinrichtungen über die Oberfläche des Flugkörpers verteilt weist dabei zudem den weiteren Vorteil der besonderen Sicherheit des erfindungsgemäßen Systems bei redundanter Auslegung der Messpunkte auf. Insbesondere können externe Ereignisse wie beispielsweise ein Vogelschlag nur zum Ausfall von einer Apertur bzw. einer optischen Sensoreinrichtung führen und deswegen nicht zum unmittelbaren Gesamtverlust des Flugdatensystems führen. Weiterhin lässt sich das erfindungsgemäße System einfacher kalibrieren als die aus dem Stand der Technik bekannten Systeme, da das erfindungsgemäße System auch unter sich verändernden Flugbedingungen immer über eine große Menge an Messdaten aus dem flugzustandsabhängigen Strömungsfeld verfügt.

Gemäß einem zweiten Aspekt betrifft die vorliegende Erfindung ein Verfahren zur optischen Detektion von Luftdaten eines umströmten Flugkörpers umfassend die Schritte:
- Bereitstellen mehrerer optischer Sensoreinrichtungen, die jeweils hinter einer optischen Apertur angeordnet sind und zur Ferndetektion von Luftströmungen in Messpunkten beabstandet zur umströmten Oberfläche des Flugkörpers ausgebildet sind, insbesondere zur Bestimmung von Windgeschwindigkeiten in einer Sichtlinienrichtung der optischen Sensoreinrichtung,
- Anordnen der optischen Aperturen an unterschiedlichen Positionen auf der Flugkörperoberfläche,
- Erfassen von Daten der Luftströmung in den jeweiligen Messpunkten durch die optischen Sensoreinrichtungen,
- Verarbeiten der erfassten Daten mittels einer Verarbeitungseinrichtung zur Bestimmung lokaler Windgeschwindigkeiten in den Messpunkten durch optische Strömungsanalyse, insbesondere durch Auswertung von Aerosolbewegungen und/oder Partikelbewegungen und/oder Strömungsmerkmalen.

Erfindungsgemäß kann der erste Aspekt als auch der zweite Aspekt der vorliegenden Erfindung mit folgenden optionalen und bevorzugten Ausführungsformen ausgestaltet werden, welche nachfolgend spezifisch im Hinblick auf das erfindungsgemäße System gemäß dem ersten Aspekt der Erfindung beschrieben werden, jedoch auch im Hinblick auf das beschriebene Verfahren gemäß dem zweiten Aspekt anwendbar bzw. kombinierbar sind.

So kann vorgesehen sein, dass die mehreren optischen Sensoreinrichtungen dazu ausgebildet sind, die lokalen Windgeschwindigkeiten in mehreren unterschiedlichen Messpunkten zu bestimmen, wobei die mehreren Messpunkte entlang der gesamten Oberfläche des Flugkörpers und in beliebigen Abständen zu der Oberfläche festlegbar sind.

Weiterhin kann die Verarbeitungseinrichtung dazu ausgebildet werden, die mittels der optischen Sensoreinrichtung ermittelten Windgeschwindigkeiten in dem jeweiligen Messpunkt durch Vergleich mit einem strömungssimulationsbasierten Referenzmodell, insbesondere basierend auf einem Computational Fluid Dynamics (CFD) beruhenden Modell, zu kalibrieren. Die Verarbeitungseinrichtung kann dabei bei der Kalibrierung bzw. Korrektur der Messdaten besonders bevorzugt die spezifische Position der jeweiligen optischen Apertur und die Positionierung des virtuellen Messpunkts der jeweiligen optischen Sensoreinrichtung im Rahmen der Kalibrierung berücksichtigen.

Es kann vorgesehen werden, dass die Verarbeitungseinrichtung weiterhin dazu ausgebildet ist, aus den lokalen Windgeschwindigkeiten den Anstellwinkel und/oder den Schiebewinkel des Flugkörpers zu berechnen. Weiterhin kann die Verarbeitungseinrichtung dazu ausgebildet werden, aus der Mehrzahl der ermittelten lokalen Windgeschwindigkeiten die globale wahre Windgeschwindigkeit True Air Speed zu ermitteln.

Die mehreren optischen Sensoreinrichtungen können erfindungsgemäß unterschiedliche optische Aperturen und/oder unterschiedliche Abstände des Messpunktes relativ zu der Oberfläche des Flugkörpers aufweisen.

Bei den optischen Aperturen, welche auch als optische Ports bezeichnet werden können, handelt es sich um für die Sensorwellenlänge der optischen Sensoreinrichtung transparente bzw. durchgängige Flächenanteile bzw. Fenster in der Oberfläche des Flugkörpers, welche wiederum bündig mit der Oberfläche des Flugkörpers ausgebildet werden und hinter den optischen Aperturen strömungsabgewandt im Inneren des Flugkörpers mindestens eine Sensoreinrichtung anordnenbar ist.

Die optischen Aperturen können in unterschiedlichen Positionen der Oberfläche des Flugkörpers ausgebildet werden, an denen die anliegende Luftströmung weitgehend frei von aerodynamischen Störungen, wie insbesondere Turbulenzen, Verwirbelungen oder Strömungsablösungen, ist.

Unter den aerodynamischen Störungen werden erfindungsgemäß die Störungen in der Luftströmung des Flugkörpers verstanden, welche durch den Flugkörper selbst bei dessen Umströmung verursacht werden.

Die Position der jeweiligen optischen Apertur und damit einhergehend die Positionierung des virtuellen Messpunkts der jeweiligen optischen Sensoreinrichtung kann anhand von Strömungssimulationen an einem Referenzmodell, bevorzugt innerhalb einer numerischen Strömungssimulation, angepasst bzw. optimiert werden.

Die Messpunkte der mehreren optischen Sensoreinrichtungen können dabei derart gewählt werden, dass diese bei einer Umströmung des Flugkörpers im Überschallbereich außerhalb des Bereichs von Stoßfronten und/oder von Shocks liegen.

Erfindungsgemäß kann es vorgesehen werden, dass die optischen Sensoreinrichtungen zur Bestimmung der Windgeschwindigkeiten ausgewählt sind aus mindestens einem Element aus der Gruppe bestehend aus:
- einem Laser-Doppler-Anemometer,
- einem kohärenten Wind-Lidar,
- einem frequenzmodulierten kontinuierlichen Wellen-Lidar (FMCW-Lidar),
- einem direkt empfangenden Doppler-Wind-Lidar, oder
- einem molekularen optischen Luftdatensensor.

Es kann vorgesehen werden, dass es sich bei dem Flugkörper beispielsweise um ein Luftfahrzeug handelt. Besonders bevorzugt können die optischen Aperturen an Positionen der Oberfläche des Luftfahrzeugs angeordnet werden, die ausgewählt sind aus der Gruppe von beispielsweise seitlich an der Flugzeugnase, mittig an der Oberseite der Flugzeugnase, versetzt an der Vorderkante des Flügels, mittig an der Spitze des Seitenleitenwerks.

Selbstverständlich können erfindungsgemäß auch beliebige andere Positionen entlang der Oberfläche des Luftfahrzeugs vorgesehen werden.

Es kann vorgesehen werden, dass mehrere optische Sensoreinrichtungen hinter mehreren unterschiedlichen Aperturen an unterschiedlichen Positionen auf der Flugkörperoberfläche angeordnet sind, die Windgeschwindigkeiten in einem gemeinsamen Messpunkt aus unterschiedlichen Blickwinkeln messen.

Im Nachfolgenden werden unter Bezugnahme auf die beigefügten Figuren beispielhafte Ausführungsformen von erfindungsgemäßen Systemen zur optischen Detektion von Flugdaten eines umströmten Flugkörpers dargestellt.

Es zeigen:
- Fig. 1: eine perspektivische schematische Ansicht einer ersten beispielhaften Ausführungsform eines Systems zur optischen Detektion von Flugdaten eines umströmten Flugkörpers;
- Fig. 2: eine schematische Seitenansicht des Systems gemäß Fig. 1; sowie
- Fig. 3: eine schematische Schnittansicht einer zweiten beispielhaften Ausführungsform eines Systems zur optischen Detektion von Flugdaten eines umströmten Flugkörpers.

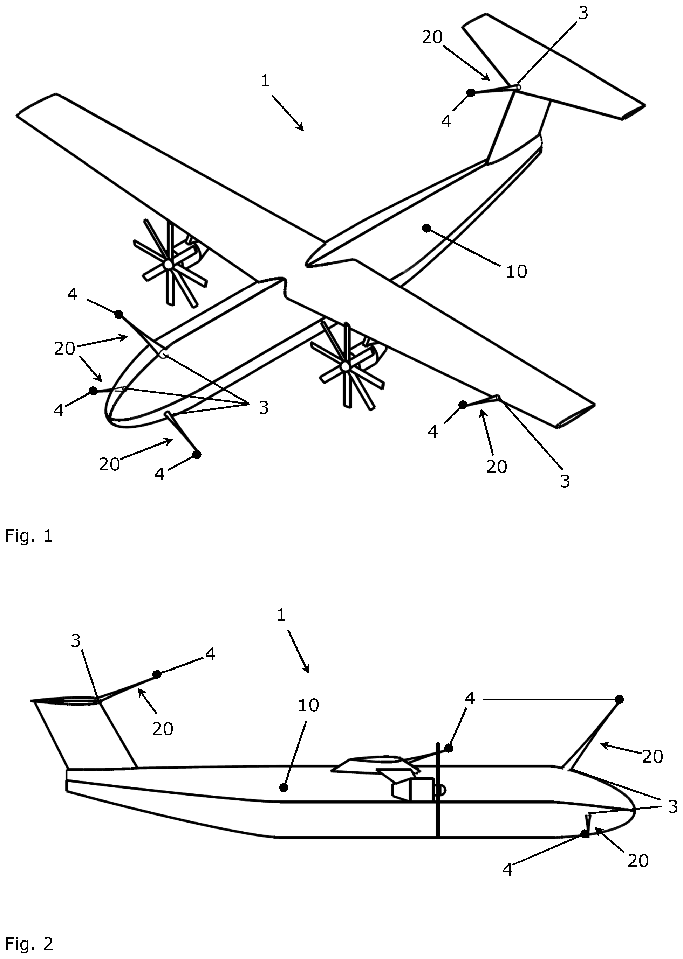

Die Figuren 1 und 2 zeigen eine erste beispielhafte Ausführungsform eines Systems zur optischen Detektion von Flugdaten eines umströmten Flugkörpers 1. In den Figuren 1 und 2 ist als Flugkörper 1 beispielhaft ein Luftfahrzeug dargestellt.

Erfindungsgemäß können jedoch auch andere Flugkörper 1 gewählt werden, um daran das erfindungsgemäße System auszubilden, wie beispielsweise Raketen, luftatmende Flugkörper, oder auch beispielsweise Drehflügler.

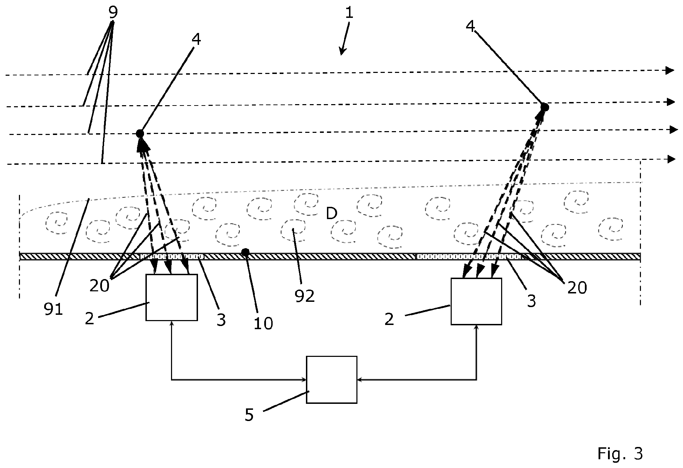

Das in den Figuren 1 und 2 beispielhaft dargestellte erfindungsgemäße System zur optischen Detektion von Flugdaten des umströmten Flugkörpers 1 weist mehrere optische Sensoreinrichtungen 2 auf, welche in den Figuren 1 und 2 zur verbesserten Sichtbarkeit nicht dargestellt sind, hierzu wird jedoch auf die Figur 3 verwiesen. Die optischen Sensoreinrichtungen 2 sind jeweils hinter einer optischen Apertur 3 angeordnet und zur Ferndetektion von Luftströmungen 9 in Messpunkten 4 beabstandet zur umströmten Oberfläche 10 des Flugkörpers ausgebildet. Insbesondere können die optischen Sensoreinrichtungen 2 zur Bestimmung der Windgeschwindigkeit in einer Sichtlinienrichtung 20 der jeweiligen optischen Sensoreinrichtung 2 ausgebildet werden. Die mehreren optischen Aperturen 3 sind erfindungsgemäß an unterschiedlichen Positionen auf der Oberfläche 10 des Flugkörpers 1 verteilt angeordnet. Das erfindungsgemäße System weist weiterhin eine in den Figuren 1 und 2 nicht dargestellte Verarbeitungseinrichtung 5 auf, welche derart ausgebildet ist, aus den durch die optischen Sensoreinrichtungen 2 erfassten Daten lokale Windgeschwindigkeiten in den Messpunkten 4 mittels optischer Strömungsanalyse, insbesondere durch Auswertung von Aerosolbewegungen und/oder Partikelbewegungen und/oder sonstigen Strömungsmerkmalen zu ermitteln.

In der dargestellten spezifischen Ausführungsform des erfindungsgemäßen Systems gemäß Figuren 1 und 2 ist das System beispielhaft an einem Flugzeug als Flugkörper 1 ausgebildet. In der beispielhaften Ausführungsform verfügt das System über die Anzahl von sechs optischen Aperturen 3, hinter denen jeweils eine optische Sensoreinrichtung 2 angeordnet und zur Ferndetektion von Luftströmungen in Messpunkten 4 beabstandet zur umströmten Oberfläche 10 des Flugkörpers 1 ausgebildet ist. In der dargestellten Ausführungsform gemäß Figuren 1 und 2 ist lediglich beispielhaft die Anzahl von sechs optischen Aperturen 3 mit jeweiligen definierten Messpunkten 4 dargestellt. Die in den Figuren 1 und 2 gewählten beispielhaften Positionen der Aperturen 3 als auch der Messpunkte 4 können erfindungsgemäß auch abweichend bzw. frei verteilt auf der Oberfläche 10 des Flugkörpers gewählt werden. Insofern sind die in den Figuren 1 und 2 dargestellten Positionen der Messpunkte 4 als auch der Aperturen 3 lediglich zur Verdeutlichung einer möglichen Ausführungsform gewählt worden.

So wie dies den Figuren 1 und 2 entnehmbar ist, kann es sich erfindungsgemäß bei dem Flugkörper 1 um ein Luftfahrzeug handeln und die optischen Aperturen 3 können an Positionen angeordnet werden, wie beispielsweise seitlich an der Flugzeugnase, mittig an der Oberseite der Flugzeugnase, versetzt an der Vorderkante des Flügels, mittig an der Spitze eines Seitenleitwerks des Flugzeugs. In der Fig. 1 und Fig. 2 ist bereits ersichtlich, dass es sich erfindungsgemäß bei den Messpunkten 4 um virtuelle Messpunkte handelt, die zunächst aufgrund der Anordnung der optischen Aperturen 3 auf der umströmten Oberfläche 10 des Flugkörpers 1 sowie aber auch weiterhin aufgrund der Ausrichtung der Sichtlinienrichtung 20 der jeweiligen optischen Sensoreinrichtung 2 sowie spezifisch durch den Fokuspunkt der optischen Sensoreinrichtung 2 definiert bzw. vorgegeben ist. So wie dies auch den Figuren 1 und 2 entnehmbar ist, können die optischen Sensoreinrichtungen 2 dabei derart ausgebildet werden, dass diese in unterschiedliche Blickrichtungen als auch in unterschiedlichen Abständen die Windgeschwindigkeiten in den Messpunkten 4 ermitteln. Die optischen Sensoreinrichtungen 2 sind dabei jedoch jeweils so ausgestaltet, dass diese zur Detektion der Luftströmungen beabstandet zu der umströmten Oberfläche 10 des Flugkörpers 1 in mindestens einem virtuellen Messpunkt 4 ausgebildet sind. So wie dies beispielhaft in den Figuren 1 und 2 dargestellt ist, können die mehreren optischen Sensoreinrichtungen 2 dazu ausgebildet werden, die lokalen Windgeschwindigkeiten in mehreren unterschiedlichen Messpunkten 4 zu bestimmen, wobei die mehreren Messpunkte 4 entlang der gesamten Oberfläche 10 des Flugkörpers 1 und in beliebigen Abständen zu der Oberfläche 10 des Flugkörpers festlegbar sind. Es kann dabei auch erfindungsgemäß vorgesehen werden, dass die mehreren optischen Sensoreinrichtungen 2 unterschiedliche optische Aperturen 3 und/oder unterschiedliche Abstände des Messpunkts 4 relativ zu der Oberfläche 10 des Flugkörpers 1 aufweisen.

Die optischen Aperturen 3 können dabei erfindungsgemäß bündig mit der Oberfläche 10 des Flugkörpers 1 ausgebildet werden und bevorzugt für die Wellenlänge der optischen Sensoreinrichtung als transparenter Anteil der Oberfläche 10 des Flugkörpers ausgebildet werden.

Die optischen Aperturen 3 können dabei erfindungsgemäß an Positionen der Oberfläche 10 des Flugkörpers 1 ausgebildet bzw. angeordnet werden, an denen die anliegende Luftströmung weitgehend frei von aerodynamischen Störungen wie Turbulenzen, Verwirbelungen oder Strömungsablösungen ist, wobei die vorbezeichneten aerodynamischen Störungen erfindungsgemäß als Störungen verstanden werden, die durch den umströmten Flugkörper 1 selbst bei dessen Umströmung verursacht werden.

In der Fig. 3 ist eine weitere schematische Ansicht einer beispielhaften Ausführungsform eines erfindungsgemäßen Systems schematisch dargelegt. Dabei sind in der Darstellung gemäß Fig. 3 lediglich ein Oberflächenabschnitt 10 des Flugkörpers 1 beispielhaft dargestellt. In der beispielhaften Ausführungsform gemäß Fig. 3 sind zwei optische Sensoreinrichtungen 2 ausgebildet, die jeweils hinter einer optischen Apertur 3 angeordnet und zur Ferndetektion von Luftströmungen 9 in Messpunkten 4 beabstandet zur umströmten Oberfläche 10 des Flugkörpers 1 ausgebildet sind. In der Figur 3 ist weiterhin die im Bereich der umströmten Oberfläche 10 des Flugkörpers 1 vorliegende bzw. sich ergebende Grenzschicht 91 dargestellt, in welcher eine turbulente Strömung 92 auftritt. Die Messpunkte 4 wurden dabei in ihrer Positionierung so gewählt, dass diese außerhalb des Bereiches der turbulenten Strömung 92 in der Grenzschicht 91 beabstandet zu der Grenzschicht 91 angeordnet werden und damit im ungestörten Strömungsfeld liegen. Die zwei optischen Aperturen 3 können, so wie dargestellt, an unterschiedlichen Positionen auf der Oberfläche 10 des Flugkörpers 1 verteilt angeordnet werden und können, wie ebenfalls dargestellt, unterschiedliche Größen aufweisen. Weiterhin umfasst das erfindungsgemäße System eine Verarbeitungseinrichtung 5, die aus den durch die optischen Sensoreinrichtungen 2 erfassten Daten Windgeschwindigkeiten in den Messpunkten 4 mittels optischer Strömungsanalyse bestimmt, insbesondere durch die Auswertung von Aerosolbewegungen und/oder Partikelbewegungen und/oder sonstigen Strömungsmerkmalen. Die Verarbeitungseinrichtung 5 kann dabei weiterhin dazu ausgebildet werden, die mittels der optischen Sensoreinrichtung 2 ermittelten Windgeschwindigkeiten in dem jeweiligen Messpunkt 4 durch Vergleich mit einem strömungssimulationsbasierten Referenzmodell, insbesondere einem auf Computational Fluid Dynamics beruhenden Modell, zu kalibrieren. Die Verarbeitungseinrichtung 5 kann auch dazu ausgebildet werden, aus den lokalen Windgeschwindigkeiten, bevorzugt aus den kalibrierten lokalen Windgeschwindigkeiten, den Anstellwinkel und/oder den Schiebewinkel des gesamten Flugkörpers zu berechnen. Weiterhin kann vorgesehen werden, dass mittels der Verarbeitungseinrichtung 5 aus der Mehrzahl der ermittelten lokalen Windgeschwindigkeiten die globale wahre Windgeschwindigkeit ermittelt wird.

### Bezugszeichenliste

- 1: Flugkörper
- 2: optische Sensoreinrichtung
- 3: Apertur
- 4: Messpunkt
- 5: Verarbeitungseinrichtung
- 9: Luftströmung
- 10: Oberfläche
- 20: Sichtlinienrichtung
- 91: Grenzschicht der Luftströmung
- 92: turbulente Luftströmung

## Patentansprüche

1. System zur optischen Detektion von Flugdaten eines umströmten Flugkörpers (1), aufweisend:
mehrere optische Sensoreinrichtungen (2), die jeweils hinter einer optischen Apertur (3) angeordnet und zur Ferndetektion von Luftströmungen (9) in Messpunkten (4) beabstandet zur umströmten Oberfläche (10) des Flugkörpers (1) ausgebildet sind, insbesondere zur Bestimmung der Windgeschwindigkeit in einer Sichtlinienrichtung (20) der optischen Sensoreinrichtung (2),
wobei die mehreren optischen Aperturen (3) an unterschiedlichen Positionen auf der Oberfläche (10) des Flugkörpers (1) verteilt angeordnet sind, sowie
eine Verarbeitungseinrichtung (5), die aus den durch die optischen Sensoreinrichtungen (2) erfassten Daten lokale Windgeschwindigkeiten in den Messpunkten (4) mittels optischer Strömungsanalyse bestimmt, insbesondere durch Auswertung von Aerosolbewegungen und/oder Partikelbewegungen und/oder Strömungsmerkmalen.

2. System nach Anspruch 1, wobei die mehreren optischen Sensoreinrichtungen (2) dazu ausgebildet sind, die lokalen Windgeschwindigkeiten in mehreren unterschiedlichen Messpunkten (4) zu bestimmen, wobei die mehreren Messpunkte (4) entlang der gesamten Oberfläche (10) des Flugkörpers (1) und in beliebigen Abständen zu der Oberfläche (10) festlegbar sind.

3. System nach Anspruch 1 oder 2, wobei die Verarbeitungseinrichtung (5) weiterhin dazu ausgebildet ist, die mittels der optischen Sensoreinrichtungen (2) ermittelten Windgeschwindigkeiten in dem jeweiligen Messpunkt (4) durch Vergleich mit einem strömungssimulationsbasierten Referenzmodell, insbesondere einem auf Computational Fluid Dynamics (CFD) beruhenden Modell, zu kalibrieren.

4. System nach einem der vorausgehenden Ansprüche, wobei hinter jeder optischen Apertur (3) jeweils eine optische Sensoreinrichtung (2) angeordnet ist, und wobei die jeweilige optische Sensoreinrichtung (2) dazu ausgebildet ist, in dem Fokuspunkt der jeweiligen Sensoreinrichtung (2), welcher einen Messpunkt (4) ausbildet, die Luftströmung zu detektieren, insbesondere die Windgeschwindigkeit der Luftströmung in dem jeweiligen Fokuspunkt zu bestimmen.

5. Sytem nach einem der vorausgehenden Ansprüche, wobei die jeweilige Sensoreinrichtung (2) mindestens einen optischen Sensor zum Analysieren der von dem virtuellen Messpunkt (4) gestreuten optischen Strahlen und mindestens eine Laserquelle aufweist, welche zum Aussenden von Strahlung in Sichtlinienrichtung zum virtuellen Messpunkt (4) ausgebildet ist und wobei ein richtungsselektives optisches Element vorgesehen ist, welches im Bereich eines gemeinsamen optischen Ein- und Ausgangs im Strahlengang der Sensoreinrichtung (2) angeordnet und dazu ausgebildet ist, die von der mindestens einen Laserquelle ausgesendete Laserstrahlung in Richtung der optischen Apertur (3) auszugeben und die über die optische Apertur (3) empfangene gestreute Strahlung an den optischen Sensor zu leiten.

6. System nach einem der vorausgehenden Ansprüche, wobei die Verarbeitungseinrichtung (5) weiterhin dazu ausgebildet ist, aus den lokalen Windgeschwindigkeiten den Anstellwinkel und/oder den Schiebewinkel des Flugkörpers (1) zu berechnen.

7. System nach einem der vorausgehenden Ansprüche, wobei die Verarbeitungseinrichtung (5) weiterhin dazu ausgebildet ist, aus der Mehrzahl der ermittelten lokalen Windgeschwindigkeiten die globale wahre Windgeschwindigkeit zu ermitteln.

8. System nach einem der vorausgehenden Ansprüche, wobei die mehreren optischen Sensoreinrichtungen (2) unterschiedliche optische Aperturen (3) und/oder unterschiedliche Abstände des Messpunktes (4) relativ zu der Oberfläche (10) des Flugkörpers (1) aufweisen.

9. System nach einem der vorausgehenden Ansprüche, wobei die optischen Aperturen (3) bündig mit der Oberfläche (10) des Flugkörpers (1) ausgebildet sind, bevorzugt als für die Wellenlänge der optischen Sensoreinrichtung (2) transparenter Anteil der Oberfläche (10) des Flugkörpers (1) ausgebildet sind.

10. System nach einem der vorhergehenden Ansprüche, wobei sich die optischen Aperturen (3) an Positionen der Oberfläche (10) des Flugkörpers (1) befinden, an denen die anliegende Luftströmung weitgehend frei von aerodynamischen Störungen wie Turbulenzen, Verwirbelungen oder Strömungsablösungen ist.

11. System nach einem der vorausgehenden Ansprüche, wobei die Messpunkte (4) der mehreren optischen Sensoreinrichtungen (2) derart gewählt sind, dass diese bei einer Umströmung des Flugkörpers (1) im Überschallbereich außerhalb des Bereiches von Stoßfronten und/oder von Shocks liegen.

12. System nach einem der vorhergehenden Ansprüche, wobei die optischen Sensoreinrichtungen (2) zur Bestimmung der Windgeschwindigkeiten aus der Gruppe bestehend aus:
• einem Laser-Doppler-Anemometer,
• einem kohärenten Wind-Lidar,
• einem frequenzmodulierten kontinuierlichen Wellen-Lidar (FMCW-Lidar),
• einem direkt empfangenden Doppler-Wind-Lidar, oder
• einem molekularen optischen Lufdatensensor.
ausgewählt sind.

13. System nach einem der vorhergehenden Ansprüche, wobei es sich bei dem Flugkörper (1) um ein Luftfahrzeug handelt und wobei die optischen Aperturen (2) an Positionen angeordnet sind, die ausgewählt sind aus der Gruppe:
• seitlich an der Flugzeugnase,
• mittig an der Oberseite der Flugzeugnase,
• versetzt an der Vorderkante eines Flügels,
• mittig an der Spitze eines Seitenleitwerks.

14. System nach einem der vorhergehenden Ansprüche, wobei mehrere optische Sensoreinrichtungen (2), welche hinter mehreren unterschiedlichen Aperturen (3) an unterschiedlichen Positionen auf der Oberfläche (10) des Flugkörpers (1) angeordnet sind, die Windgeschwindigkeiten in einem gemeinsamen Messpunkt (4) aus unterschiedlichen Blickwinkeln messen.

15. Verfahren zur optischen Detektion von Luftdaten eines umströmten Flugkörpers (1) umfassend die Schritte:
• Bereitstellen mehrerer optischer Sensoreinrichtungen (2), die jeweils hinter einer optischen Apertur (3) angeordnet sind und zur Ferndetektion von Luftströmungen in Messpunkten (4) beabstandet zur umströmten Oberfläche (10) des Flugkörpers (1) ausgebildet sind, insbesondere zur Bestimmung von Windgeschwindigkeiten in einer Sichtlinienrichtung der optischen Sensoreinrichtung (2),
• Anordnen der optischen Aperturen (3) an unterschiedlichen Positionen auf der Oberfläche (10) des Flugkörpers (1),
• Erfassen von Daten der Luftströmung in den jeweiligen Messpunkten (4) durch die optischen Sensoreinrichtungen (2),
• Verarbeiten der erfassten Daten mittels einer Verarbeitungseinrichtung (5) zur Bestimmung lokaler Windgeschwindigkeiten in den Messpunkten (4) durch optische Strömungsanalyse, insbesondere durch Auswertung von Aerosolbewegungen und/oder Partikelbewegungen und/oder Strömungsmerkmalen.
